# EUROPEAN PATENT SPECIFICATION

(11) **EP 1 690 952 B1**
(45) Date of publication and mention of the grant of the patent: **23.08.2017**
(21) Application number: 04819783.4
(22) Date of filing: 26.11.2004
(51) Int. Cl.: C22C 9/04, F16D 23/06

(54) **SYNCHRONIZER RING MADE OF COPPER ALLOY EXHIBITING EXCELLENT RESISTANCE TO PLASTIC FLOW UNDER HIGH EXOTHERMIC CIRCUMSTANCE**
SYNCHRONRING AUS KUPFERLEGIERUNG MIT HERVORRAGENDER BESTÄNDIGKEIT GEGENÜBER PLASTISCHEM FLIESSEN UNTER HOCHEXOTHERMEN BEDINGUNGEN
BAGUE DE SYNCHRONISEUR CONSTITUEE D'UN ALLIAGE DE CUIVRE PRESENTANT UNE EXCELLENTE RESISTANCE A L'ECOULEMENT PLASTIQUE DANS DES CONDITIONS EXOTHERMIQUES ELEVEES

(30) Priority: 02.12.2003 JP 2003403164
(43) Date of publication of application: 16.08.2006
(73) Proprietor: MITSUBISHI MATERIALS CORPORATION, Chiyoda-ku, Tokyo 100-8117 (JP)
(72) Inventor: KOBAYASHI, Masao, Okegawa-shi, Saitama 363-0026 (JP)
(74) Representative: Hoffmann Eitle
(86) International application number: PCT/JP2004/017552
(87) International publication number: WO 2005/054526

(56) References cited:
- JP-A- 1 252 743
- JP-A- 1 252 745
- JP-A- 8 120 427
- JP-A- 10 110 227
- JP-A- 61 060 847
- JP-A- 64 000 239
- JP-A- 64 000 239
- US-A- 4 874 439
- US-A- 4 874 439
- US-A- 4 995 924
- US-A- 5 788 924
- US-A- 5 788 924

## Description

### Technical Field

The present invention relates to a copper alloy synchronizer ring used for an automotive transmission and having an excellent plasticity/flowability resistance in a high calorific heat releasing environment in comparison with a conventional synchronizer ring.

### Background Art

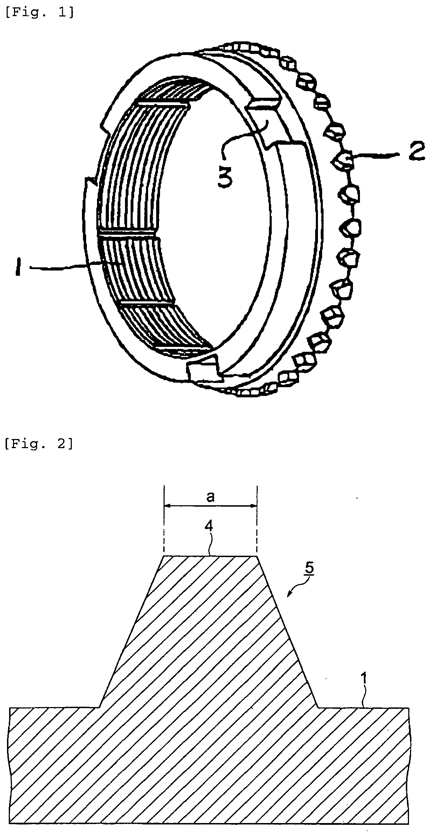

Generally, a synchronizer ring is used as one part for an automotive transmission. As shown in a perspective view of Fig. 1, the synchronizer ring has an inner surface 1, and key grooves engaged with keys are formed on an outer surface thereof. In addition, in an outer circumference, chamfers 2 which are engaged with hub sleeve, that is, a counter part thereof are disposed in a predetermined spacing interval. As shown in a partial cross sectional view of Fig. 2, screw threads 5 having a top land 4 are formed on the inner surface 1 of the synchronizer ring. The inner surface 1 of the synchronizer ring intermittently contacts a rotating gear cone (not shown) through synchronized sliding and separating under a high surface pressure. As an example, there has been proposed a synchronizer ring which is made of a copper alloy having a composition of Zn: 20 ∼ 40 wt%, Al: 2 ∼ 11 wt%, a total of one or more of Fe, Ni, and Co: 1 ∼ 5 wt%, Ti: 0.1 ∼ 4 wt%, Mn: 0.01 - 0.1 wt% or less, and S: 0.0005 - 0.1 wt%, an additional composition, as needed, of Mg: 0.01 - 0.5 wt%, and a balance of Cu and inevitable impurities (see Patent Document 1). It is known that, since the conventional synchronizer ring has a base structure where there are no α-phase or a substantial β-single-phase having very small α-phase, the synchronizer ring has an excellent abrasion resistance.
[Patent Document 1] Japanese Unexamined Patent Application Publication No. 8-127831

### Disclosure of the Invention

### Problems to be Solved by the Invention

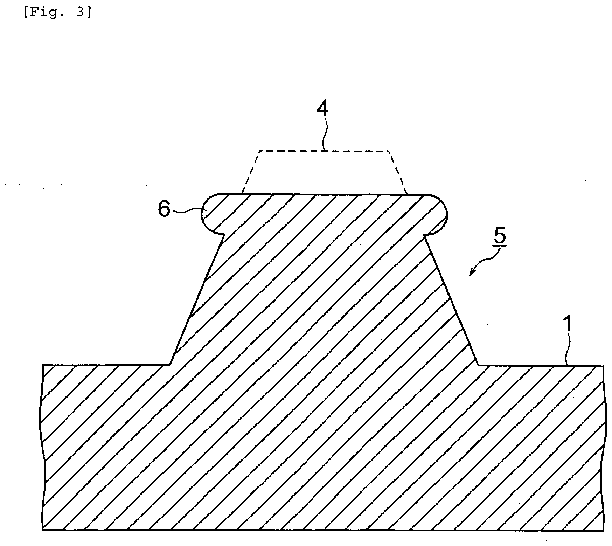

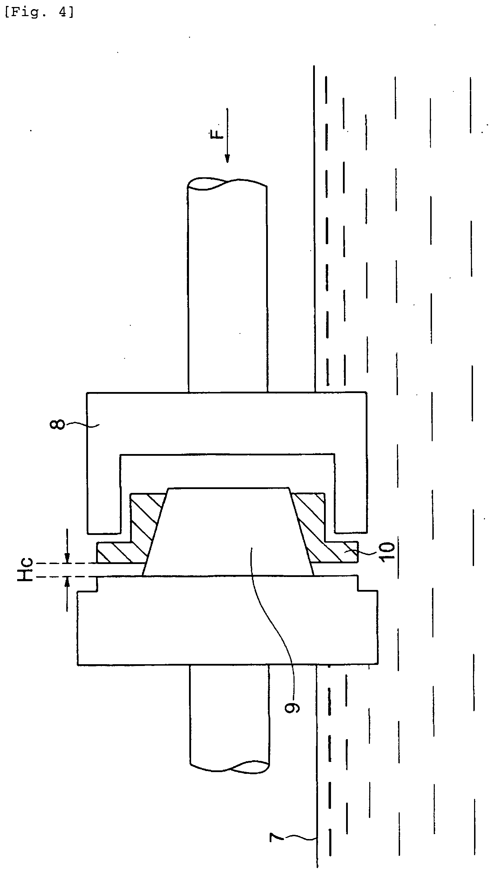

Recently, in order to increase fuel mileage, power transmission loss in transmission oil intends to be reduced. Therefore, transmission oil having a low viscosity has been developed, and reduction of a charging amount of the transmission oil has been researched. However, in this case, a temperature of an abrasion sliding surface increases, so that a large thermal load is exerted on the synchronizer ring. If the synchronizer ring is used under such a severely high temperature condition for a long time, the conventional synchronizer ring is abraded, so that a height of the top land thereof is lowered. In addition, since a temperature of a material in the vicinity of the top land 4 of the screw thread 5 formed in the inner surface 1 becomes high, a phenomenon that a portion of the material is in a plastically flowing state occurs. As shown in a partial enlarged cross sectional view of Fig. 3, a head of the screw thread 5 is deformed so as to form a fungus-head-shaped portion 6. Due to the plastically flowing phenomenon of some portion of the material as well as the abrasion, the height of the screw thread 5 is more rapidly reduced than expected, so that the inner diameter of the synchronizer ring is more rapidly increased than expected. Therefore, a rear surface clearance shown in Fig. 4 more rapidly disappears that expected. As a result, the rear surface and the counter-part gear cone contact each other, so that the so-called gear creaking occurs earlier than expected.

### Means for Solving the Problems

The inventors have researched on a copper alloy synchronizer ring having an excellent plasticity/flowability resistance in a high calorific heat releasing environment in comparison with a conventional synchronizer ring. The following results of research have been obtained.
(A) In the conventional synchronizer ring having a base structure where there no α-phase or a substantial β-single-phase having very small α-phase, since a heat resistance is basically insufficient, so that the plastically flowing phenomenon easily occurs in a high calorific heat releasing environment. Although a synchronizer ring having a base structure where there are a large number of α-phases is proposed, since the synchronizer ring has a poor thermal conductivity, a plasticity/flowability resistance is also poor in the high calorific heat releasing environment.
(B) The α-phase of a copper alloy has better heat resistance and plasticity/flowability resistance that the β-phase and the β'-phase. Therefore, if the α-phase exists at higher temperature, the plastically flowing phenomenon can be prevented, so that it is possible to improve the plasticity/flowability resistance of the synchronizer ring in the high calorific heat releasing environment.
(C) If Cu of 65 wt% or more and Ni of 0.5 wt% or more are included in the α-phase, the α-phase exists up to 650°C. Therefore, an excellent plasticity/flowability resistance can be obtained at a high temperature. However, if Cu of 74 wt% or more and Ni of 2.5 wt% or more are included in the α-phase, it is difficult to perform a hot extrusion.
(D) The β-phase exists as regular-lattice β'-phase below a transition temperature, and the β'-phase has more excellent thermal conductivity and strength that irregular-lattice β-phase. Therefore, if the temperature of β' (regular lattice) -> β (irregular lattice) transition is high, it is possible to improve the plasticity/flowability resistance of the synchronizer ring.
(E) If Al of 3.5 wt% or more is included in the β-phase (β'-phase), the temperature of β' (regular lattice) - > β (irregular lattice) transition becomes 550°C or more, so that an excellent plasticity/flowability resistance can be obtained in a high temperature state. However, although Al of 6.0 wt% or more is included in the β-phase (β'-phase), the temperature of β' (regular lattice) -> β (irregular lattice) transition does not increase. Due to the large amount of Al, the thermal conductivity is lowered, so that the plasticity/flowability resistance deteriorates.
(F) For the reason, if a copper alloy synchronizer ring is made of an copper alloy constructed with a two-phase structure of the α-phase having a composition of Cu: 65 ∼ 74% and Ni: 0.5 ∼ 2.5% and existing up to 650 °C and the β'-phase having a composition of Al: 3.5 ∼ 6.0 wt% and a temperature of β' (regular lattice) -> β (irregular lattice) transition of 550 °C or more, it is possible to obtain an excellent plasticity/flowability resistance in a high calorific heat releasing environment.
(G) The copper alloy constructed with a two-phase structure of the α-phase and β'-phase has a composition of Cu: 62.5 ∼ 67.5 wit%, Al: 4.5 ∼ 5.5 wt%, Ni: 2.7 ∼ 3.7 wt%, Ti: 1.0 ∼ 2.0 wt%, and Mn: 0.05 ∼ 0.35 wt% and a balance of Zn and inevitable impurities, wherein, when Zn+(inevitable impurities)=ZN, a Zn equivalence represented by an equation {ZN+6x(Al-0.9)}/{Cu-1.3+ZN+6x(Al-0.9)} is in a range of 0.4 ∼ 0.46.

The present invention is contrived based on the aforementioned results of the research and is directed to a copper alloy synchronizer ring according to appended claim 1 with optional embodiments thereof as defined in the respective dependent claims.
(1) According to a first aspect of the present invention, there is provided a copper alloy synchronizer ring having an excellent plasticity/flowability resistance in a high calorific heat releasing environment, the copper alloy synchronizer ring has a composition of Cu: 62.5 ∼ 67.5 wt%, A1: 4.5 ∼ 5.5 wt%, Ni: 2.7 ∼ 3.7 wt%, Ti: 1.0 ∼ 2.0 wt%, and Mn: 0.05 ∼ 0.35 wt% and a balance of Zn and inevitable impurities, wherein, when Zn+(inevitable impurities)=ZN, a Zn equivalence represented by an equation {ZN+6x(Al-0.9)}/{Cu-1.3+ZN+6x(Al-0.9)} is in a range of 0.4 ∼ 0.46, and wherein a basic structure of a copper alloy is a two-phase structure of α-phase and β'-phase.
   In the copper alloy synchronizer ring having an excellent plasticity/flowability resistance in a high calorific heat releasing environment according to the above first aspect of the invention, the α-phase may have a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, and Zn: 22 ∼ 28 wt%, and the β'-phase may have a composition of Cu: 62 ∼ 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, and Zn: 25 ∼ 31 wt%.
(2) According to a second aspect of the present invention, there is provided a copper alloy synchronizer ring having an excellent plasticity/flowability resistance in a high calorific heat releasing environment, the copper alloy synchronizer ring has a composition of Cu: 62.5 ∼ 67.5 wt%, Al: 4.5 ∼ 5.5 wt%, Ni: 2.7 ∼ 3.7 wt%, Ti: 1.0 ∼ 2.0 wt%, and Mn: 0.05∼0.35 wt% and a balance of Zn and inevitable impurities, wherein, when Zn+(inevitable impurities)=ZN, a Zn equivalence represented by an equation {ZN+6x(Al-0.9)}/{Cu-1.3+ZN+6x(Al-0.9)} is in a range of 0.4∼0.46, and wherein a basic structure of a copper alloy is a two-phase structure of α-phase and β'-phase, and wherein the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, and Zn: 22 ∼ 28 wt%, and the β'-phase has a composition of Cu: 62 - 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, and Zn: 25 ∼ 31 wt%.
   In the copper alloy synchronizer ring having an excellent plasticity/flowability resistance in a high calorific heat releasing environment according the above first and second aspects of the present invention, the copper alloy may have an additional composition of a total of one or two of Fe and Co: 0.5 ∼ 1.5 wt%, so that it is possible to further improve abrasion resistance thereof.
(3) According to a third aspect of the present invention, there is provided a copper alloy synchronizer ring having an excellent plasticity/flowability resistance in a high calorific heat releasing environment, the copper alloy synchronizer ring has a composition of Cu: 62.5 ∼ 67.5 wt%, Al: 4.5 ∼ 5.5 wt%, Ni: 2.7 ∼ 3.7 wt%, Ti: 1.0 ∼ 2.0 wt%, and Mn: 0.05 ∼ 0.35 wt%, an additional composition of a total of one or two of Fe and Co: 0.5 ∼ 1.5 wt%, and a balance of Zn and inevitable impurities, wherein, when Zn+(inevitable impurities)=ZN, a Zn equivalence represented by an equation {ZN+6x(Al-0.9)}/{Cu-1.3+ZN+6x(Al-0.9)} is in a range of 0.4∼0.46, and wherein a basic structure of a copper alloy is a two-phase structure of α-phase and β'-phase.
   In the base structure of the copper alloy synchronizer ring having an excellent plasticity/flowability resistance in a high calorific heat releasing environment, which has an additional composition of a total of one or two of Fe and Co: 0.5 ∼ 1.5 wt%, the basic structure of a copper alloy is a two-phase structure of α-phase and β'-phase, wherein the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, a total of one or two of Fe and Co: 0.05 ∼ 1.0 wt%, and Zn: 22 ∼ 28 wt%, and the β'-phase has a composition of Cu: 62 ∼ 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, a total of one or two of Fe and Co: 0.05 ∼ 1.0 wt%, and Zn: 25 ∼ 31 wt%.
(4) According to a fourth aspect of the present invention, there is provided a copper alloy synchronizer ring having an excellent plasticity/flowability resistance in a high calorific heat releasing environment, the copper alloy synchronizer ring has a composition of Cu: 62.5 ∼ 67.5 wt%, Al: 4.5 ∼ 5.5 wt%, Ni: 2.7 ∼ 3.7 wt%, Ti: 1.0 ∼ 2.0 wt%, and Mn: 0.05 ∼ 0.35 wt%, an additional composition of a total of one or two of Fe and Co: 0.5 ∼ 1.5 wt%, and a balance of Zn and inevitable impurities, wherein, when Zn+(inevitable impurities)=ZN, a Zn equivalence represented by an equation {ZN+6x(Al-0.9)}/{Cu-1.3+ZN+6x(Al-0.9)} is in a range of 0.4 ∼ 0.46 wherein a basic structure of a copper alloy is a two-phase structure of α-phase and β'-phase, and wherein the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, a total of one or two of Fe and Co: 0.05 ∼ 1.0 wt%, and Zn: 22 ∼ 28 wt%, and the P'-phase has a composition of Cu: 62 ∼ 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, a total of one or two of Fe and Co: 0.05 ∼ 1.0 wt%, and Zn=25 ∼ 31 wt%.
   In the copper alloy synchronizer ring having an excellent plasticity/flowability resistance in a high calorific heat releasing environment according the above first to fourth aspects of the present invention, the copper alloy may have an additional composition of a total of one or two or more of Si, Mg, and P: 0.01 ∼ 0.3 wt%, so that it is possible to further improve heat resistance thereof.
(5) According to an aspect of the present invention, there is provided a copper alloy synchronizer ring having an excellent plasticity/flowability resistance in a high calorific heat releasing environment, the copper alloy synchronizer ring has a composition of Cu: 62.5 ∼ 67.5 wt%, Al: 4.5 ∼ 5.5 wt%, Ni: 2.7 ∼ 3.7 wt%, Ti: 1.0 ∼ 2.0 wt%, and Mn: 0 .05 ∼ 0.35 wt%, an additional composition of a total of one or two or more of Si, Mg, and P: 0.01 ∼ 0.3 wt%, and a balance of Zn and inevitable impurities, wherein, when Zn+(inevitable impurities)=ZN, a Zn equivalence represented by an equation {ZN+6x(Al-0.9)}/{Cu-1.3+ZN+6x(Al-0.9)} is in a range of 0.4 ∼ 0.46, and wherein a basic structure of a copper alloy is a two-phase structure of α-phase and β'-phrase.
(6) According to an aspect of the present invention, there is provided a copper alloy synchronizer ring having an excellent plasticity/flowability resistance in a high calorific heat releasing environment, the copper alloy synchronizer ring has a composition of Cu: 62.5 ∼ 67.5 wt%, Al: 4.5 ∼ 5.5 wt%, Ni: 2.7 ∼ 3.7 wt%, Ti: 1.0 ∼ 2.0 wt%, and Mn: 0.05 ∼ 0.35 wt%, an additional composition of a total of one or two or more of Si, Mg, and P: 0.01 ∼ 0.3 wt%, and a balance of Zn and inevitable impurities, wherein, when Zn+(inevitable impurities)=ZN, a Zn equivalence represented by an equation {ZN+6x(Al-0.9)}/{Cu-1.3+ZN+6x(A1-0.9)} is in a range of 0.4 ∼ 0.46, wherein a basic structure of a copper alloy is a two-phase structure of α-phase and β'-phase, and wherein the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, a total of one or two or more of Si, Mg, and P: 0.01 ∼ 0.35 wt%, and Zn: 22 ∼ 28 wt%, and the β'-phase has a composition of Cu: 62 ∼ 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, a total of one or two or more of Si, Mg, and P: 0.01 ∼ 0.35 wt%, and Zn: 25 ∼ 31 wt%.
(7) According to an aspect of the present invention, there is provided a copper alloy synchronizer ring having an excellent plasticity/flowability resistance in a high calorific heat releasing environment, the copper alloy synchronizer ring has a composition of Cu: 62.5 ∼ 67.5 wt%, Al: 4.5 ∼ 5.5 wt%, Ni: 2.7 ∼ 3.7 wt%, Ti: 1.0 ∼ 2.0 wt%, and Mn: 0.05 ∼ 0.35 wt%, an additional composition of a total of one or two of Fe and Co: 0.5 ∼ 1.5 wt%, an additional composition of a total of one or two or more of Si, Mg, and P: 0.01 ∼ 0.3 wt%, and a balance of Zn and inevitable impurities, wherein, when Zn+(inevitable impurities)=ZN, a Zn equivalence represented by an equation {ZN+6x(Al-0.9)}/{Cu-1.3+ZN+6x(Al-0.9)} is in a range of 0.4 ∼ 0.46, and wherein a basic structure of a copper alloy is a two-phase structure of α-phase and β'-phase.
(8) According to an aspect of the present invention, there is provided a copper alloy synchronizer ring having an excellent plasticity/flowability resistance in a high calorific heat releasing environment, the copper alloy synchronizer ring has a composition of Cu: 62.5 ∼ 67.5 wt%, Al: 4.5 ∼ 5.5 wt%, Ni: 2.7 ∼ 3.7 wt%, Ti: 1.0 ∼ 2.0 wt%, and Mn: 0.05 ∼ 0.35 wt%, an additional composition of a total of one or two of Fe and Co: 0.5 ∼ 1.5 wt%, an additional composition of a total of one or two or more of Si, Mg, and P: 0.01 ∼ 0.35 wt%, and a balance of Zn and inevitable impurities, wherein, when Zn+(inevitable impurities)=ZN, a Zn equivalence represented by an equation {ZN+6x(Al-0.9)}/{Cu-1.3+ZN+6x(Al-0.9)} is in a range of 0.4 ∼ 0.46, wherein a basic structure of a copper alloy is a two-phase structure of α-phase and β'-phase, and wherein the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, a total of one or two of Fe and Co: 0.05 ∼ 1.0 wt%, a total of one or two or more of Si, Mg, and P: 0.01 ∼ 0.35 wt%, and Zn: 22 ∼ 28 wt%, and the β'-phase has a composition of Cu: 62 ∼ 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, a total of one or two of Fe and Co: 0.05 ∼ 1.0 wt%, a total of one or two or more of Si, Mg, and P: 0.01 ∼ 0.35 wt%, and Zn: 25 ∼ 31 wt%.

### Effect of the Invention

According to the present invention, the copper alloy synchronizer ring has an excellent plasticity/flowability resistance in a high calorific heat releasing environment in comparison with a conventional synchronizer ring. Accordingly, although the synchronizer ring is used under such a severely high temperature condition, it can be used with excellent performance for a long time in industrial fields.

According to the present invention, the copper alloy synchronizer ring having an excellent plasticity/flowability resistance in a high calorific heat releasing environment is manufactured by forming a billet which has a composition of Cu: 62.5 ∼ 67.5 wt%, A1: 4.5 ∼ 5.5 wt%, Ni: 2.7 ∼ 3.7 wt%, Ti: 1. 0 ∼ 2.0 wt%, and Mn: 0.05 ∼ 0.35 wt%, an additional composition, as needed, of a total of one or two of Fe and Co: 0.5 ∼ 1.5 wt%, an additional composition, as needed, of a total of one or two or more of Si, Mg, and P: 0.01 ∼ 0.3 wt%, and a balance of Zn and inevitable impurities, wherein, when Zn+(inevitable impurities)=ZN, a Zn equivalence represented by an equation {ZN+6x(Al-0.9)}/{Cu-1.3+ZN+6x(Al-0.9)} is in a range of 0.4 ∼ 0.46, performing a plastic working process on the billet to form a synchronizer ring having a predetermined size, performing a heating process thereon at a temperature of 250 ∼ 350°C, performing air or water cooling thereof in a thermal refining process to generate a two-phase structure of α-phase and β'-phase, and performing a machining process with a predetermined size.

Now, reasons for the aforementioned limitations to the compositions, the Zn equivalence, and the base structure of the copper alloy synchronizer ring having an excellent plasticity/flowability resistance in a high calorific heat releasing environment.

### A. Composition

### Cu:

If a composition of Cu is less than 62.5 wt%, a desired ductility cannot be obtained. If a composition of Cu is more than 67.5 wt%, a desired strength cannot be obtained. Therefore, a composition of Cu is limited to a range of 62.5 ∼ 67.5 wt%.

### Al:

Al has a function of improving strength and tenacity. However, if a composition of Al is less than 4.5 wt%, desired strength and tenacity cannot be obtained. If a composition of Al is more that 5.5 wt%, thermal conductivity is lowered. Therefore, a composition of Al is limited to a range of 4.5 ∼ 5.5 wt%.

### Ni and Ti:

Ni and Ti constitute a crystallized material in a coexistent state thereof such as Ni-Ti-based intermetallic compound (wherein Ni and Ti are main components, and Cu, Al, and a small amount of Zn are contained), and the crystallized material is dispersed in a base material, so that the Ni and Ti have a function of improving abrasion resistance in a sliding abrasion environment. However, if a composition of Ni is less than 2.7 wt% and a composition of Ti is less than 1.0 wt%, desired effect cannot be obtained. If a composition of Ni is more than 3.7 wt% and a composition of Ti is more than 2.0 wt%, melting and casting properties deteriorate. Therefore, a composition of Ni and Ti is limited to a range of Ni: 2.7 ∼ 3.7 wt% and Ti: 1.0 ∼ 2.0 wt%.

### Mn:

Mn has a function of improving abrasion resistance in a sliding abrasion environment. However, if a composition of Mn is less than 0.05 wt%, the effect is not sufficient. If a composition of Mn is more than 0.35 wt%, thermal conductivity is lowered. Therefore, a composition of Mn is limited to a range of 0.05 ∼ 0.35 wt%.

### Fe, Co:

Similar to Ni, Fe or Co constitute a crystallized material in a Ti coexistent state thereof, and the crystallized material is dispersed in a base material, so that Fe or Co has a function of improving abrasion resistance in a sliding abrasion environment. Therefore, as needed, Fe or Co is added. However, if a composition of Fe or Co is less than 0.5 wt%, desired effect cannot be obtained. If a composition of Fe or Co is more than 1.5 wt%, a cutting property deteriorates. Therefore, a composition of Fe or Co is limited to a range of a total of one or two of Fe and Co: 0.5 ∼ 1.5 wt%.

### Si, Mg, P:

Si, Mg, or P has a function of improving heat resistance and further improving a plasticity/flowability resistance of the synchronizer ring. Therefore, as needed, Si, Mg, or P is added. However, if a composition of Si, Mg, or P is less than 0.01 wt%, a desired effect cannot be obtained. On the other hand, although the composition of Si, Mg, or P is more than 0.3 wt%, the effect of improving the plasticity/flowability resistance cannot be obtained, and the melting and casting properties deteriorate. Therefore, a composition of Si, Mg, or P is limited to a range of a total of one or two or more of Si, Mg, and P: 0.01 ∼ 0.3 wt%.

### Zn Equivalence

Since the copper alloy constituting the synchronizer ring according to the present invention contains Cu, Zn, Al as main components, the Zn equivalence is represented by {ZN+6x(Al-0.9)}/{Cu-1.3+ZN+6x(Al-0.9)}, wherein Zn+(inevitable impurities)=ZN. Therefore, the Zn equivalence is used as a criterion for determining an existence ratio of the α-phase and the β'-phase in the base structure. However, if the Zn equivalence is less than 0.4, the α-phase is too increased, so that the strength and the thermal conductivity deteriorate. If the Zn equivalence is more than 0.46, the α-phase is too decreased, so that the melting and casting properties deteriorate at a high temperature. Therefore, the Zn equivalence is limited to a range of 0.4≤(Zn equivalence)≤0.46.

### B. Base Structure

As described above, it is preferable that the base structure is constructed with a two-phase structure of the α-phase and the β'-phase. Preferably, the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, and Zn: 22 ∼ 28 wt%, an additional composition, as needed of a total of one or two of Fe and Co: 0.05 ∼ 1.0 wt%, and an additional composition, as needed of a total of one or two or more of Si, Mg, and P: 0.01 ∼ 0.35 wt%. On the other hand, preferably, the β'-phase has a composition of Cu: 62 ∼ 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, and Zn=25 ∼ 31 wt%, an additional composition, as needed of a total of one or two of Fe and Co: 0.05 ∼ 1.0 wt%, and an additional composition, as needed of a total of one or two or more of Si, Mg, and P: 0.01 ∼ 0.35 wt%. In this case, preferably, a dispersion ratio of the α-phase and the β'-phase is in a range of α-phase: 5 ∼ 30% and a balance of the β'-phase in unit of area %.

### Best Mode for Carrying out the Invention

Firstly, in a general high frequency melting furnace, a Cu alloy molten metal having a composition and a Zn equivalence shown in Tables 1 to 4 was produced. The obtained molten metal was cast in a mold having an inner diameter of 250 mm at a casting temperature of 1,100°C to form a continuous casting billet having a diameter of 250 mm and a length of 3,000 mm. The billet was cut by a predetermined length and subject to a hot extrusion process at a temperature of 750°C to form an extruded pipe having an outer diameter of 72 mm and an inner diameter of 54 mm. Next, the pipe was cut by using a machining process and subject to a cutting process for the inner and outer surfaces thereof, so that a forging ring having an outer diameter of 70 mm, an inner diameter of 56 mm, and a height of 10 mm was produced.

After the ring was heated at a temperature of 700°C, the ring was set on a lower mold and pressed by an upper mold in a hot forging process. Next, the hot forged structure was heated at a temperature of 300°C. Next, air cooling was performed thereon in a thermal refining process. As a result, a two-phase structure including an α-phase having a composition shown in Tables 5 to 8 and a β'-phase having a composition shown in Tables 9 to 12 was generated. Next, test samples of synchronizer rings 1 to 28 according to the present invention (hereinafter, referred to as present invention rings), comparative rings 1 to 19 (hereinafter, referred to as comparative synchronizer rings), and conventional synchronizer rings 1 and 2 (hereinafter, referred to as conventional rings) were produced to have a maximum outer diameter of 76 mm, a minimum inner diameter of 54 mm, a height of 7 mm, a inner surface thread height of 0.3 mm, and a thread top land width a (width denoted by a in Fig. 2) of 0.1 mm by using a machining process. In addition, the compositions of the α-phase and the β'-phase were measured in accordance with EPMA methods.

Next, as shown in a partial cross sectional view of Fig. 4, a friction testing machine equipped with a pressing member 8 and a ratable gear cone 9 made of a carburized quenched steel was prepared. The test samples 10 of the present invention rings 1 to 28, the comparative rings 1 to 19, and the conventional rings 1 and 2 were inserted into the gear cone 9 of the friction testing machine as shown in Fig. 4. A flow rate of a low-viscosity oil (type of oil: 15 W-30) heated at an oil temperature of 100°C was regulated, so that an oil line 7 was disposed at the lowest position of the inner surface of the synchronizer ring as shown in Fig. 4. A constant speed durability test was performed on the test samples 10 of the present invention rings 1 to 28, the comparative rings 1 to 19, and the conventional rings 1 and 2 in rotation of the tapered cone 9 of the friction testing machine with a rotation number of 1,500 rpm by repeating 10,000 times a process of pressing the synchronizer rings with the pressing member having a load weight F of 100 kg for 0.2 seconds and releasing thereof for 1.0 seconds. After the constant speed durability test, a reduced amount of a rear surface clearance Hc between the test samples 10 of the synchronizer rings and the counterpart gear cone 9 was measured. The results of the measurement were shown in Tables 13 and 14.

In addition, a temperature of α-phase disappearance and a temperature of β' (regular lattice) -> β (irregular lattice) transition of the test samples of the present invention rings 1 to 28, the comparative rings 1 to 19, and the conventional rings 1 and 2 were measured. The results of the measurement were shown in Tables 13 and 14. For the measurement of the temperature of α-phase disappearance, the present invention rings 1 to 28, the comparative rings 1 to 19, and the conventional rings 1 and 2 were heat at a predetermined temperature, and after a predetermined sustaining time, water cooling was performed. In this state, micro structure thereof was observed with an optical microscope. In addition, for the measurement of the temperature of β' (regular lattice) -> β (irregular lattice) transition, a differential thermal analyzer was used.

**[Table 1]**

| Components | | Composition of Synchronizer Ring (Wt%) | | | | | | | | | | | |
|---|---|---|---|---|---|---|---|---|---|---|---|---|---|
| | | Cu | Al | Ni | Ti | Mn | Fe | Co | Si | Mg | P | Zn+(Inevitable Impurities) | Zn Equivalence |
| Present Invention Ring | 1 | 62.7 | 5.0 | 3.1 | 1.6 | 0.15 | - | - | - | - | - | 27.5 | 0.46 |
| | 2 | 65.1 | 5.2 | 3.2 | 1.5 | 0.16 | - | - | - | - | - | 24.8 | 0.44 |
| | 3 | 67.3 | 5.0 | 3.2 | 1.6 | 0.15 | - | - | - | - | - | 22.8 | 0.42 |
| | 4 | 65.2 | 4.6 | 3.1 | 1.4 | 0.12 | - | - | - | - | - | 25.6 | 0.43 |
| | 5 | 65.0 | 5.4 | 3.3 | 1.5 | 0.14 | - | - | - | - | - | 24.7 | 0.45 |
| | 6 | 65.1 | 4.8 | 2.8 | 1.5 | 0.13 | - | - | - | - | - | 25.7 | 0.43 |
| | 7 | 65.2 | 5.1 | 3.6 | 1.6 | 0.14 | - | - | - | - | - | 24.4 | 0.44 |
| | 8 | 64.9 | 4.9 | 3.2 | 1.1 | 0.15 | - | - | - | - | - | 25.8 | 0.44 |
| | 9 | 65.2 | 5.0 | 3.3 | 1.9 | 0.16 | - | - | - | - | - | 24.4 | 0.43 |
| | 10 | 64.8 | 5.1 | 3.1 | 1.5 | 0.07 | - | - | - | - | - | 25.4 | 0.44 |
| | 11 | 65.0 | 4.9 | 3.2 | 1.4 | 0.33 | - | - | - | - | - | 25.2 | 0.44 |
| | 12 | 65.1 | 5.0 | 3.3 | 1.6 | 0.13 | 0.6 | - | - | - | - | 24.3 | 0.43 |
| | 13 | 65.2 | 4.9 | 3.1 | 1.5 | 0.12 | 1.4 | - | - | - | - | 23.8 | 0.43 |
| | 14 | 64.8 | 5.1 | 3.3 | 1.5 | 0.14 | - | 0.6 | | - | - | 24.6 | 0.44 |

**[Table 2]**

| Components | | Composition of Synchronizer Ring (Wt%) | | | | | | | | | | | |
|---|---|---|---|---|---|---|---|---|---|---|---|---|---|
| | | Cu | Al | Ni | Ti | Mn | Fe | Co | Si | Mg | P | Zn+(Inevitable Impurities) | Zn Equivalence |
| Present Invention Ring | 15 | 65.0 | 4.8 | 3.2 | 1.6 | 0.15 | - | 1.4 | - | - | - | 23.9 | 0.43 |
| | 16 | 64.9 | 5.0 | 3.2 | 1.5 | 0.16 | 0.5 | 0.6 | - | - | - | 24.1 | 0.43 |
| | 17 | 65.0 | 5.1 | 3.3 | 1.5 | 0.15 | - | - | 0.01 | - | - | 24.9 | 0.44 |
| | 18 | 65.4 | 5.2 | 3.2 | 1.6 | 0.16 | - | - | 0.27 | - | - | 24.2 | 0.44 |
| | 19 | 65.3 | 5.0 | 3.1 | 1.6 | 0.15 | - | - | - | 0.02 | - | 24.8 | 0.44 |
| | 20 | 64.7 | 4.9 | 3.3 | 1.5 | 0.16 | - | - | - | 0.29 | - | 25.2 | 0.44 |
| | 21 | 65.2 | 4.8 | 3.2 | 1.5 | 0.15 | - | - | - | - | 0.01 | 25.1 | 0.43 |
| | 22 | 65.0 | 5.1 | 3.1 | 1.5 | 0.14 | - | - | - | - | 0.28 | 24.9 | 0.44 |
| | 23 | 65.1 | 5.0 | 3.3 | 1.6 | 0.13 | - | - | 0.05 | 0.06 | 0.06_ | 24.7 | 0.44 |
| | 24 | 65.3 | 5.1 | 3.2 | 1.5 | 0.12 | 0.7 | - | 0.05 | - | - | 24.0 | 0.43 |
| | 25 | 65.2 | 4.8 | 3.3 | 1.6 | 0.14 | 0.8 | - | 0.06 | 0.06 | - | 24.0 | 0.43 |
| | 26 | 65.0 | 4.9 | 3.2 | 1.4 | 0.13 | - | 0.6 | - | 0.07 | - | 24.7 | 0.43 |
| | 27 | 64.8 | 5.2 | 3.1 | 1.5 | 0.15 | - | 0.7 | - | 0.08 | 0.07 | 24.4 | 0.44 |
| | 28 | 65.1 | 5.1 | 3.2 | 1.6 | 0.14 | 0.4 | 0.5 | 0.06 | 0.04 | 0.05 | 23.8 | 0.43 |

**[Table 3]**

| Components | | Composition of Synchronizer Ring (Wt%) | | | | | | | | | | | |
|---|---|---|---|---|---|---|---|---|---|---|---|---|---|
| | | Cu | Al | Ni | Ti | Mn | Fe | Co | Si | Mg | P | Zn+(Inevitable Impurities) | Zn Equivalence |
| Compacati ve Ring | 1 | 68.5* | 5.0 | 3.2 | 1.5 | 0.12 | - | - | - | - | - | 21.7 | 0.41 |
| | 2 | 61.0* | 5.1 | 3.2 | 1.4 | 0.15 | - | - | - | - | - | 29.2 | 0.48 |
| | 3 | 65.0 | 6.0* | 3.3 | 1.6 | 0.14 | - | - | - | - | - | 24.0 | 0.46 |
| | 4 | 65.1 | 4.0* | 3.1 | 1.5 | 0.15 | - | - | - | - | - | 26.2 | 0.41 |
| | 5 | 65.2 | 5.1 | 4.0* | 1.5 | 0.13 | - | - | - | - | - | 24.1 | 0.44 |
| | 6 | 64.9 | 4.9 | 2.0* | 1.6 | 0.16 | - | - | - | - | - | 26.4 | 0.44 |
| | 7 | 65.2 | 5.0 | 3.1 | 2.5* | 0.15 | - | - | - | - | - | 24.1 | 0.43 |
| | 8 | 65.1 | 5.0 | 3.2 | 0.5* | 0.14 | - | - | - | - | - | 26.1 | 0.44 |
| | 9 | 64.8 | 5.1 | 3.2 | 1.5 | 0.45* | - | - | - | - | - | 25.0 | 0.44 |
| | 10 | 64.9 | 5.1 | 3.3 | 1.4 | 0.02* | - | - | - | - | - | 25.3 | 0.44 |
| | 11 | 62.5 | 5.5 | 2.7 | 1.0 | 0.05 | - | - | - | - | - | 28.3 | 0.48* |
| | 12 | 67.5 | 4.5 | 3.7 | 2.0 | 0.35 | 1.5 | - | 0.3 | - | - | 20.2 | 0.39* |
| | 13 | 65.0 | 5.0 | 3.1 | 1.4 | 0.14 | 1.9* | - | - | - | - | 23.5 | 0.43 |
| | 14 | 65.1 | 4.9 | 3.3 | 1.5 | 0.16 | - | 2.0* | - | - | - | 23.0 | 0.42 |

| | | | | | | | | | | | | | |
|---|---|---|---|---|---|---|---|---|---|---|---|---|---|
| Symbol '*' Denotes A Value Deviated From The Scope of The Present Invention. | | | | | | | | | | | | | |

**[Table 4]**

| Components | | Composition of Synchronizer Ring (Wt%) | | | | | | | | | | | |
|---|---|---|---|---|---|---|---|---|---|---|---|---|---|
| | | Cu | Al | Ni | Ti | Mn | Fe | Co | Si | Mg | P | Zn+(Inevitable Impuritie s) | Zn Equivalence |
| Comparative Ring | 15 | 65.1 | 4.9 | 3.2 | 1.6 | 0.16 | 1.0* | 0.8* | - | - | - | 23.2 | 0.43 |
| | 16 | 64.9 | 5.0 | 3.1 | 1.5 | 0.15 | - | - | 0.35* | - | - | 25.0 | 0.44 |
| | 17 | 65.0 | 5.2 | 3.2 | 1.5 | 0.15 | - | - | - | 0.38* | - | 24.6 | 0.44 |
| | 18 | 65.1 | 5.1 | 3.3 | 1.6 | 0.16 | - | - | - | - | 0.37* | 24.4 | 0.44 |
| | 19 | 65.2 | 5.0 | 3.1 | 1.6 | 0.13 | - | - | 0.13* | 0.12* | 0.14* | 24.6 | 0.43 |
| Conventio nal Ring | 1 | 61.04 | 4.7 | 1.1 | 1.50 | 0.06 | - | - | - | - | - | 31.6 | 0.477 |
| | 2 | 60.00 | 4.6 | 2.5 | 1.60 | 0.08 | - | - | - | 0.02 | - | 31.2 | 0.476 |

| | | | | | | | | | | | | | |
|---|---|---|---|---|---|---|---|---|---|---|---|---|---|
| Symbol '*' Denotes A Value Deviated From The Scope of The Present Invention. | | | | | | | | | | | | | |

**[Table 5]**

| Components | | Remarks | Composition of α-Phase in Base Structure of Synchronizer Ring (Wt%) | | | | | | | | | | |
|---|---|---|---|---|---|---|---|---|---|---|---|---|---|
| | | | Cu | Al | Ni | Ti | Mn | Fe | Co | Si | Mg | P | Zn |
| Present Invention Ring | 1 | Table 1 is Continued | 66.8 | 3.5 | 1.6 | 0.1 | 0.2 | - | - | - | - | - | 27.8 |
| | 2 | | 69.3 | 3.2 | 1.8 | 0.2 | 0.2 | - | - | - | - | - | 25.3 |
| | 3 | | 72.4 | 3.5 | 1.8 | 0.1 | 0.1 | - | - | - | - | - | 22.1 |
| | 4 | | 69.5 | 2.6 | 1.3 | 0.1 | 0.3 | - | - | - | - | - | 26.2 |
| | 5 | | 70.5 | 4.3 | 1.6 | 0.2 | 0.2 | - | - | - | - | - | 23.2 |
| | 6 | | 69.2 | 3.3 | 0.8 | 0.2 | 0.1 | - | - | - | - | - | 26.4 |
| | 7 | | 69.7 | 3.0 | 2.2 | 0.1 | 0.3 | - | - | - | - | - | 24.7 |
| | 8 | | 69.0 | 3.8 | 1.6 | 0.06 | 0.2 | - | - | - | - | - | 25.3 |
| | 9 | | 69.6 | 4.0 | 1.7 | 0.5 | 0.2 | - | - | - | - | - | 24.0 |
| | 10 | | 70.5 | 3.7 | 1.3 | 0.2 | 0.05 | - | - | - | - | - | 24.3 |
| | 11 | | 70.2 | 4.1 | 1.9 | 0.2 | 0.4 | - | - | - | - | - | 23.2 |
| | 12 | | 69.1 | 3.1 | 2.1 | 0.2 | 0.2 | 0.06 | - | - | - | - | 25.2 |
| | 13 | | 68.8 | 2.9 | 1.7 | 0.2 | 0.2 | 0.7 | - | - | - | - | 23.8 |
| | 14 | | 70.5 | 3.6 | 1.4 | 0.1 | 0.2 | - | 0.07 | - | - | - | 24.1 |

**[Table 6]**

| Components | | Remarks | Composition of α-Phase in Base Structure of Synchronizer Ring (Wt%) | | | | | | | | | | |
|---|---|---|---|---|---|---|---|---|---|---|---|---|---|
| | | | Cu | Al | Ni | Ti | Mn | Fe | Co | Si | Mg | P | Zn |
| Present Invention Ring | 15 | Table 2 is Continued | 69.5 | 3.4 | 1.6 | 0.1 | 0.1 | - | 0.5 | - | - | - | 24.8 |
| | 16 | | 69.0 | 3.1 | 1.5 | 0.2 | 0.2 | 0.03 | 0.04 | - | - | - | 25.9 |
| | 17 | | 70.3 | 3.7 | 1.2 | 0.1 | 0.2 | - | - | 0.01 | - | - | 24.5 |
| | 18 | | 69.7 | 3.5 | 1.7 | 0.1 | 0.1 | - | - | 0.31 | - | - | 24.6 |
| | 19 | | 69.1 | 3.6 | 1.4 | 0.2 | 0.3 | - | - | - | 0.03 | - | 25.4 |
| | 20 | | 70.2 | 3.3 | 1.5 | 0.2 | 0.2 | - | - | - | 0.33 | - | 24.3 |
| | 21 | | 71.2 | 3.6 | 1.6 | 0.1 | 0.1 | - | - | - | - | 0.01 | 23.4 |
| | 22 | | 68.9 | 3.6 | 1.5 | 0.2 | 0.2 | - | - | - | - | 0.31 | 25.3 |
| | 23 | | 69.6 | 3.5 | 1.5 | 0.1 | 0.1 | - | - | 0.06 | 0.06 | 0.07 | 25.0 |
| | 24 | | 69.9 | 3.9 | 1.8 | 0.1 | 0.2 | 0.07 | - | 0.05 | - | - | 24.0 |
| | 25 | | 70.6 | 3.5 | 1.5 | 0.2 | 0.2 | 0.06 | - | 0.07 | 0.06 | - | 23.8 |
| | 26 | | 69.1 | 3.6 | 1.2 | 0.2 | 0.1 | - | 0.07 | - | 0.07 | - | 25.7 |
| | 27 | | 70.8 | 3.0 | 1.3 | 0.1 | 0.2 | - | 0.06 | - | 0.08 | 0.07 | 24.4 |
| | 28 | | 69.7 | 3.2 | 1.5 | 0.2 | 0.1 | 0.04 | 0.03 | 0.06 | 0.05 | 0.06 | 25.1 |

**[Table 7]**

| Components | | Remarks | Composition of α-Phase in Base Structure of Synchronizer Ring (Wt%) | | | | | | | | | | |
|---|---|---|---|---|---|---|---|---|---|---|---|---|---|
| | | | Cu | Al | Ni | Ti | Mn | Fe | Co | Si | Mg | P | Zn |
| Comparative Ring | 1 | Table 3 is Continued | Hot Extrusion, Impossible | | | | | | | | | | |
| | 2 | | 64.4* | 3.5 | 1.5 | 0.2 | 0.1 | - | - | - | - | - | 30.3* |
| | 3 | | 69.5 | 5.2* | 1.7 | 0.2 | 0.1 | - | - | - | - | - | 23.3 |
| | 4 | | 70.2 | 1.8* | 1.4 | 0.1 | 0.1 | - | - | - | - | - | 26.4 |
| | 5 | | Bad Melting And Casting Properties; Good Ingot, Impossible | | | | | | | | | | |
| | 6 | | 69.6 | 3.3 | 0.3* | 0.1 | 0.1 | - | - | - | - | - | 26.6 |
| | 7 | | Bad Melting And Casting Properties; Good Ingot, Impossible | | | | | | | | | | |
| | 8 | | 70.4 | 3.1 | 1.4 | 0.02* | 0.2 | - | - | - | - | - | 24.9 |
| | 9 | | 69.7 | 3.4 | 1.6 | 0.2 | 0.5* | - | - | - | - | - | 24.6 |
| | 10 | | 70.3 | 3.1 | 1.5 | 0.2 | 0.01* | - | - | - | - | - | 24.9 |
| | 11 | | 65.0 | 4.5 | 0.5 | 0.1 | 0.03 | - | - | - | - | - | 29.9* |
| | 12 | | Hot Extrusion, Impossible | | | | | | | | | | |
| | 13 | | Bad Cutting Property; Machining Process, Impossible | | | | | | | | | | |
| | 14 | | Bad Cutting Property; Machining Process, Impossible | | | | | | | | | | |

| | | | | | | | | | | | | | |
|---|---|---|---|---|---|---|---|---|---|---|---|---|---|
| Symbol '*' Denotes A Value Deviated From The Scope of The Present Invention. | | | | | | | | | | | | | |

**[Table 8]**

| Components | | Remarks | Composition of α-Phase in Base Structure of Synchronizer Ring (Wt%) | | | | | | | | | | |
|---|---|---|---|---|---|---|---|---|---|---|---|---|---|
| | | | Cu | Al | Ni | Ti | Mn | Fe | Co | Si | Mg | P | Zn |
| Comparative Ring | 15 | Table 4 is Continued | Bad Cutting Property; Machining Process, Impossible | | | | | | | | | | |
| | 16 | | Bad Melting And Casting Properties; Good Ingot, Impossible | | | | | | | | | | |
| | 17 | | Bad Melting And Casting Properties; Good Ingot, Impossible | | | | | | | | | | |
| | 18 | | Bad Melting And Casting Properties; Good Ingot, Impossible | | | | | | | | | | |
| | 19 | | Bad Melting And Casting Properties; Good Ingot, Impossible | | | | | | | | | | |
| Conventional | 1 | | Bad Melting And Casting Properties; Good Ingot, Impossible | | | | | | | | | | |
| | 2 | | *α*-Phase Does Not Exist | | | | | | | | | | |

**[Table 9]**

| Components | | Remarks | Composition of β-Phase in Base Structure of Synchronizer Ring (Wt%) | | | | | | | | | | |
|---|---|---|---|---|---|---|---|---|---|---|---|---|---|
| | | | Cu | Al | Ni | Ti | Mn | Fe | Co | Si | Mg | P | Zn |
| Present Invention Ring | 1 | Table 5 is Continued | 62.5 | 4.8 | 1.5 | 0.2 | 0.1 | - | - | - | - | - | 30.9 |
| | 2 | | 65.4 | 4.8 | 1.6 | 0.1 | 0.2 | - | - | - | - | - | 27.9 |
| | 3 | | 69.0 | 4.2 | 1.3 | 0.1 | 0.2 | - | - | - | - | - | 25.2 |
| | 4 | | 64.8 | 3.6 | 1.1 | 0.2 | 0.2 | - | - | - | - | - | 30.1 |
| | 5 | | 65.1 | 5.8 | 1.5 | 0.2 | 0.2 | - | - | - | - | - | 27.2 |
| | 6 | | 64.7 | 4.6 | 0.6 | 0.1 | 0.2 | - | - | - | - | - | 29.8 |
| | 7 | | 64.5 | 4.1 | 1.9 | 0.1 | 0.3 | - | - | - | - | - | 29.1 |
| | 8 | | 65.6 | 4.7 | 1.3 | 0.06 | 0.1 | - | - | - | - | - | 28.2 |
| | 9 | | 65.8 | 4.5 | 1.4 | 0.5 | 0.1 | - | - | - | - | - | 27.7 |
| | 10 | | 64.2 | 4.4 | 1.1 | 0.1 | 0.05 | - | - | - | - | - | 30.2 |
| | 11 | | 65.7 | 4.3 | 1.6 | 0.2 | 0.4 | - | - | - | - | - | 27.8 |
| | 12 | | 65.3 | 4.5 | 1.8 | 0.1 | 0.1 | 0.06 | - | - | - | - | 28.1 |
| | 13 | | 64.3 | 4.4 | 1.6 | 0.2 | 0.2 | 0.8 | - | - | - | - | 28.5 |
| | 14 | | 64.1 | 4.6 | 1.3 | 0.2 | 0.1 | - | 0.06 | - | - | - | 29.6 |

**[Table 10]**

| Componets | | Remarks | Composition of β-Phase in Base Structure of Synchronizer Ring (Wt%) | | | | | | | | | | |
|---|---|---|---|---|---|---|---|---|---|---|---|---|---|
| | | | Cu | Al | Ni | Ti | Mn | Fe | Co | Si | Mg | P | Zn |
| Present Invention Ring | 15 | Table 6 is Continued | 65.1 | 4.6 | 1.4 | 0.2 | 0.1 | - | 0.4 | - | - | - | 28.2 |
| | 16 | | 64.5 | 4.5 | 1.3 | 0.1 | 0.1 | 0.03 | 0.04 | - | - | - | 29.4 |
| | 17 | | 65.6 | 4.8 | 1.1 | 0.1 | 0.2 | - | - | 0.02 | - | - | 28.2 |
| | 18 | | 65.1 | 4.2 | 1.4 | 0.2 | 0.2 | - | - | 0.32 | - | - | 28.6 |
| | 19 | | 65.5 | 4.3 | 1.2 | 0.1 | 0.2 | - | - | - | 0.03 | - | 28.7 |
| | 20 | | 64.3 | 4.7 | 1.3 | 0.1 | 0.2 | - | - | - | 0.31 | - | 29.1 |
| | 21 | | 64.6 | 4.6 | 1.4 | 0.1 | 0.1 | - | - | - | - | 0.02 | 29.2 |
| | 22 | | 65.7 | 4.7 | 1.2 | 0.2 | 0.1 | - | - | - | - | 0.33 | 27.8 |
| | 23 | | 64.3 | 4.5 | 1.2 | 0.1 | 0.1 | - | - | 0.06 | 0.06 | 0.08 | 29.6 |
| | 24 | | 65.7 | 4.7 | 1.5 | 0.2 | 0.1 | 0.07 | - | 0.06 | - | - | 27.7 |
| | 25 | | 65.3 | 4.3 | 1.3 | 0.2 | 0.2 | 0.07 | - | 0.07 | 0.08 | - | 28.5 |
| | 26 | | 64.8 | 4.8 | 1.0 | 0.1 | 0.1 | - | 0.06 | - | 0.06 | - | 29.1 |
| | 27 | | 64.9 | 4.3 | 1.1 | 0.1 | 0.1 | - | 0.07 | - | 0.08 | 0.07 | 29.3 |
| | 28 | | 65.2 | 4.6 | 1.2 | 0.2 | 0.2 | 0.04 | 0.04 | -0.06 | 0.06 | 0.05 | 28.4 |

**[Table 11]**

| Componets | | Remarks | Composition of β-Phase in Base Structure of Synchronizer Ring (Wt%) | | | | | | | | | | |
|---|---|---|---|---|---|---|---|---|---|---|---|---|---|
| | | | Cu | Al | Ni | Ti | Mn | Fe | Co | Si | Mg | P | Zn |
| Comparative Ring | 1 | Table 7 is Continued | Hot Extrusion, Impossible | | | | | | | | | | |
| | 2 | | 60.5* | 4.6 | 1.3 | 0.2 | 0.1 | - | - | - | - | - | 33.3* |
| | 3 | | 64.5 | 6.3* | 1.4 | 0.1 | 0.2 | - | - | - | - | - | 27.5 |
| | 4 | | 65.5 | 3.0* | 1.2 | 0.2 | 0.1 | - | - | - | - | - | 30.0 |
| | 5 | | Bad Melting And Casting Properties; Good Ingot, Impossible | | | | | | | | | | |
| | 6 | | 65.7 | 4.7 | 0.1* | 0.2 | 0.1 | - | - | - | - | - | 29.2 |
| | 7 | | Bad Melting And Casting Properties; Good Ingot, Impossible | | | | | | | | | | |
| | 8 | | 64.6 | 4.6 | 1.2 | 0.03* | 0.1 | - | - | - | - | - | 29.5 |
| | 9 | | 65.6 | 4.8 | 1.4 | 0.1 | 0.5* | - | - | - | - | - | 27.6 |
| | 10 | | 65.2 | 4.7 | 1.3 | 0.2 | 0.02* | - | - | - | - | - | 28.6 |
| | 11 | | 63.0 | 4.2 | 0.3 | 0.1 | 0.04 | - | - | - | - | - | 32.4* |
| | 12 | | Hot Extrusion, Impossible | | | | | | | | | | |
| | 13 | | Bad Cutting ting Property; Machining Process, Impossible | | | | | | | | | | |
| | 14 | | Bad Cutting Property; Machining Process, Impossible | | | | | | | | | | |

| | | | | | | | | | | | | | |
|---|---|---|---|---|---|---|---|---|---|---|---|---|---|
| Symbol '*' Denotes A Value Deviated From The Scope of The Present Invention. | | | | | | | | | | | | | |

**[Table 12]**

| Componets | | Remarks | Composition of β-Phase in Base Structure of Synchronizer Ring (Wt%) | | | | | | | | | | |
|---|---|---|---|---|---|---|---|---|---|---|---|---|---|
| | | | Cu | Al | Ni | Ti | Mn | Fe | Co | Si | Mg | P | Zn |
| Comparative Ring | 15 | Table 8 is Constituted | Bad Cutting Property; Machining Process, Impossible | | | | | | | | | | |
| | 16 | | Bad Melting And Casting Properties; Good Ingot, Impossible | | | | | | | | | | |
| | 17 | | Bad Melting And Casting Properties; Good Ingot, Impossible | | | | | | | | | | |
| | 18 | | Bad Melting And Casting Properties; Good Ingot, Impossible | | | | | | | | | | |
| | 19 | | Bad Melting And Casting Properties; Good Ingot, Impossible | | | | | | | | | | |
| Conventional | 1 | | 61.5 | 4.3 | 0.4 | 0.1 | 0.06 | - | - | - | - | - | 33.6* |
| | 2 | | 60.4 | 4.2 | 1.0 | 0.2 | 0.08 | - | - | - | 0.03 | - | 34.1* |

| | | | | | | | | | | | | | |
|---|---|---|---|---|---|---|---|---|---|---|---|---|---|
| Symbol '*' Denotes A Value Deviated From The Scope of The Present Invention. | | | | | | | | | | | | | |

**[Table 13]**

| Componets | | Reduced Amount of Rear Surface Clearance (Mm) | Temperature of α-Phase Disappearance (°C) | Temperature of β' -> β Transition (°C) |
|---|---|---|---|---|
| | 1 | 0.14 | 670 | 585 |
| | 2 | 0.12 | 690 | 583 |
| | 3 | 0.10 | 720 | 574 |
| | 4 | 0.14 | 690 | 563 |
| | 5 | 0.10 | 710 | 605 |
| | 6 | 0.15 | 660 | 582 |
| | 7 | 0.11 | 720 | 572 |
| | 8 | 0.13 | 690 | 584 |
| | 9 | 0.11 | 700 | 580 |
| | 10 | 0.12 | 700 | 578 |
| | 11 | 0.12 | 700 | 576 |
| | 12 | 0.12 | 690 | 581 |
| | 13 | 0.11 | 700 | 579 |
| Present | 14 | 0.10 | 700 | 582 |
| Invention | 15 | 0.13 | 690 | 581 |
| Ring | 16 | 0.13 | 690 | 580 |
| | 17 | 0.11 | 700 | 586 |
| | 18 | 0.12 | 700 | 572 |
| | 19 | 0.13 | 690 | 576 |
| | 20 | 0.12 | 700 | 584 |
| | 21 | 0**.**12 | 710 | 581 |
| | 22 | 0.14 | 690 | 584 |
| | 23 | 0.13 | 700 | 580 |
| | 24 | 0.12 | 700 | 583 |
| | 25 | 0.11 | 710 | 576 |
| | 26 | 0.13 | 690 | 588 |
| | 27 | 0.11 | 700 | 577 |
| | 28 | 0.12 | 700 | 581 |

**[Table 14]**

| Componets | | Reduced Amount of Rear Surface Clearance | Temperature of α-Phase Disappearance | Temperature of β' -> β Transition (°C) |
|---|---|---|---|---|
| | 1 | Hot Extrusion, Impossible | | |
| | 2 | Occurrence of Rear Surface Contact | 620 | 582 |
| | 3 | 0.35 | 690 | 610 |
| | 4 | 0.28 | 700 | 520 |
| | 5 | Bad Melting And Casting Properties; Good Ingot, Impossible | | |
| | 6 | Occurrence of Rear Surface Contact | 600 | 583 |
| | 7 | Bad Melting And Casting Properties; Good Ingot, Impossible | | |
| | 8 | 0.24 | 700 | 582 |
| Present Invention Ring | 9 | 0.32 | 690 | 588 |
| | 10 | 0.23 | 700 | 586 |
| | 11 | Occurrence of Rear Surface Contact | 580 | 572 |
| | 12 | Hot Extrusion, Impossible | | |
| | 13 | Bad Cutting Property; Machining Process, Impossible | | |
| | 14 | Bad Cutting Property; Machining Process, Impossible | | |
| | 15 | Bad Cutting Property; Machining Process, Impossible | | |
| | 16 | Bad Melting And Casting Properties; Good Ingot, Impossible | | |
| | 17 | Bad Melting And Casting Properties; Good Ingot, Impossible | | |
| | 18 | Bad Melting And Casting Properties; Good Ingot, Impossible | | |
| | 19 | Bad Melting And Casting Properties; Good Ingot, Impossible | | |
| Conventional | 1 | Occurrence of Rear Surface Contact | α-Phase Does Not Exist | 575 |
| | 2 | | | 573 |

According to the results of Tables 1 to 14, it can be seen that all the synchronizer rings 1 to 28 according to the present invention has a small reduced amount of rear surface clearance in comparison with the conventional synchronizer rings 1 and 2. In addition, it can be seen that the comparative synchronizer rings 1 to 19 has a large reduced amount of rear surface clearance.

### Brief Description of the Drawings

Fig. 1 is a perspective view showing a synchronizer ring.
Fig. 2 is a cross sectional view showing a screw thread formed in an inner surface of a synchronizer ring.
Fig. 3 is a cross sectional view for exampling plastically flowing phenomenon of a screw thread formed in an inner surface of a synchronizer ring.
Fig. 4 is a partial side cross sectional showing a friction testing machine.

### [Reference Numerals]

1: inner surface
2: chamfer
3: key groove
4: top land
5: screw thread
6: fungus-head-shaped portion
7: oil line
8: pressing member
9: gear cone
10: test sample

## Claims

1. A copper alloy synchronizer ring having an excellent plasticity/flowability resistance in a high calorific heat releasing environment,
wherein the copper alloy synchronizer ring has a composition of Cu: 62.5 - 67.5 wt%, Al: 4.5 ∼ 5.5 wt%, Ni: 2.7 ∼ 3.7 wt%, Ti: 1.0 ∼ 2.0 wt%, and Mn: 0.05 ∼ 0.35 wt%, optionally an additional composition of a total of one or two of Fe and Co: 0.5 ∼ 1.5 wt%, or an additional composition of a total of one or two or more of Si, Mg, and P: 0.01 ∼ 0.3 wt%, or an additional composition of a total of one or two of Fe and Co: 0.5 ∼ 1.5 wt%, an additional composition of a total of one or two or more of Si, Mg, and P: 0.01 ∼ 0.35 wt%, and a balance of Zn and inevitable impurities,
wherein, when Zn+(inevitable impurities)=ZN, a Zn equivalence represented by an equation {ZN+6x(Al-0.9)}/{Cu-1.3+ZN+6x(Al-0.9)} is in a range of 0.4 ∼ 0.46, and
wherein a basic structure of a copper alloy is a two-phase structure of α-phase and β'-phrase.

2. The copper alloy synchronizer ring as claimed in claim 1 and in which:
i) the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, and Zn: 22 ∼ 28 wt%, and
ii) the β'-phrase has a composition of Cu: 62 ∼ 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, and Zn: 25 ∼ 31 wt%.

3. The copper alloy synchronizer ring as claimed in claim 1 and in which:
i) the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, a total of one or two of Fe and Co: 0.05 ∼ 1.0 wt%, and Zn: 22 ∼ 28 wt%, and
ii) the β'-phase has a composition of Cu: 62 ∼71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, a total of one or two of Fe and Co: 0.05 ∼ 1.0 wt%, and Zn: 25 ∼ 31 wt%.

4. The copper alloy synchronizer ring as claimed in claim 1 and in which:
i) the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, a total of one or two or more of Si, Mg, and P: 0.01 ∼ 0.35 wt%, and Zn: 22 ∼ 28 wt%, and
ii) the β'-phase has a composition of Cu: 62 ∼ 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, a total of one or two or more of Si, Mg, and P: 0.01 ∼ 0.35 wt%, and Zn: 25 ∼ 31 wt%.

5. The copper alloy synchronizer ring as claimed in claim 1 and in which:
i) the α-phase has a composition of Cu: 65 ∼ 74 wt%, Al: 2.5 ∼ 4.5 wt%, Ni: 0.5 ∼ 2.5 wt%, Ti: 0.05 ∼ 0.6 wt%, Mn: 0.03 ∼ 0.4 wt%, a total of one or two of Fe and Co: 0.05 ∼ 1.0 wt%, a total of one or two or more of Si, Mg, and P: 0.01 ∼ 0.35 wt%, and Zn: 22 ∼ 28 wt%, and
ii) the β'-phase has a composition of Cu: 62 ∼ 71 wt%, Al: 3.5 ∼ 6.0 wt%, Ni: 0.3 ∼ 2.3 wt%, Ti: 0.05 ∼ 0.6 wt%, Mn: 0.03 ∼ 0.4 wt%, a total of one or two of Fe and Co: 0.05 ∼ 1.0 wt%, a total of one or two or more of Si, Mg, and P: 0.01 ∼ 0.35 wt%, and Zn: 25 ∼ 31 wt%.

## Patentansprüche

1. Kupferlegierungssynchronring, der einen exzellenten Plastizitäts-/Fließfähigkeitswiderstand in einer hochkalorischen Wärme abgebenden Umgebung hat,
wobei der Kupferlegierungssynchronring eine Zusammensetzung hat aus Cu: 62,5 ∼ 67,5 Gew.-%, Al: 4,5 ∼ 5,5 Ges.-%, Ni: 2,7 ∼ 3,7 Gew.-%, Ti: 1,0 ∼ 2,0 Gew.-%; und Mn: 0,05 ∼ 0,35 Gew.-%, optional eine zusätzliche Zusammensetzung aus einer Gesamtheit von einem oder zwei aus Fe und Co: 0,5 ∼ 1,5 Ges.-%, oder eine zusätzliche Zusammensetzung aus einer Gesamtheit von einem oder zwei oder mehr aus Si, Mg, und P: 0,01 ∼ 0,3 Gew.-%, oder eine zusätzliche Zusammensetzung aus einer Gesamtheit von einem oder zwei aus Fe und Co: 0,5 ∼ 1,5 Gew.-%, eine zusätzliche Zusammensetzung aus einer Gesamtheit von einem oder zwei oder mehr aus Si, Mg, und P: 0,01 ∼ 0,35 Gew.-%, und einen Ausgleich aus Zn und unvermeidbaren Unreinheiten,
wobei, wenn Zn+ (unvermeidbare Unreinheiten) =ZN, ist eine Zn Äquivalenz, dargestellt durch eine Gleichung {ZN+6x(Al-0,9)} / {Cu-1,3+ZN+6x(Al-0,9)} in einem Bereich von 0,4 ∼ 0,46, und
wobei eine Basisstruktur einer Kupferlegierung eine Zweiphasenstruktur aus α-Phase und β'-Phase ist.

2. Kupferlegierungssynchronring nach Anspruch 1 und wobei:
i) die α-Phase eine Zusammensetzung hat aus Cu: 65 ∼ 74 Gew.-%, Al: 2,5 ∼ 4,5 Gew.-%, Ni: 0,5 ∼2,5 Gew.-%, Ti: 0,05 ∼ 0,6 Gew.-%, Mn: 0,03 ∼ 0,4 Gew.-%, und Zn: 22 ∼ 28 Ges.-%, und
ii) die β'-Phase eine Zusammensetzung hat aus Cu: 62 ∼ 71 Gew.-%, Al: 3,5 ∼ 6,0 Gew.-%, Ni: 0,3 ∼ 2,3 Gew.-%, Ti: 0,05 ∼ 0,6 Gew.-%, Mn: 0,03 ∼ 0,4 Gew.-%, und Zn: 25 ∼ 31 Gew.-%.

3. Kupferlegierungssynchronring nach Anspruch 1 und wobei:
i) die α-Phase eine Zusammensetzung hat aus Cu: 65 ∼ 74 Gew.-%, Al: 2,5 ∼ 4,5 Gew.-%, Ni: 0,5 ∼ 2,5 Gew.-%, Ti: 0,05 ∼ 0,6 Gew.-%, Mn: 0,03 ∼ 0,4 Gew.-%, eine Gesamtheit von einem oder zwei aus Fe und Co: 0,05 ∼ 1,0 Gew.-%, und Zn: 22 ∼ 28 Gew.-%, und
ii) die β'-Phase eine Zusammensetzung hat aus Cu: 62 ∼ 71 Gew.-%, Al: 3,5 ∼ 6,0 Gew.-%, Ni: 0,3 ∼ 2,3 Gew.-%, Ti: 0,05 ∼ 0,6 Gew.-%, Mn: 0,03 ∼ 0,4 Gew.-%, eine Gesamtheit von einem oder zwei aus Fe und Co: 0,05 ∼ 1,0 Gew.-%, und Zn: 25 ∼ 31 Gew.-%.

4. Kupferlegierungssynchronring nach Anspruch 1 und wobei:
i) die α-Phase eine Zusammensetzung hat aus Cu: 65 ∼ 74 Gew.-%, Al: 2,5 ∼ 4,5 Gew.-%, Ni: 0,5 ∼ 2,5 Gew.-%, Ti: 0,05 ∼ 0,6 Gew.-%, Mn: 0,03 ∼ 0,4 Ges.-%, eine Gesamtheit von einem oder zwei oder mehr aus Si, Mg, und P: 0,01 ∼ 0,35 Ges.-%, und Zn: 22 ∼ 28 Gew.-%, und
ii) die β'-Phase eine Zusammensetzung hat aus Cu: 62 ∼ 71 Gew.-%, Al: 3,5 ∼ 6,0 Gew.-%, Ni: 0,3 ∼ 2,3 Gew.-%, Ti: 0,05 ∼ 0,6 Gew.-%, Mn: 0,03 ∼ 0,4 Gew.-%, und eine Gesamtheit von einem oder zwei oder mehr aus Si, Mg, und P: 0,01 ∼ 0,35 Gew.-%, und Zn: 25 ∼ 31 Gew.-%.

5. Kupferlegierungssynchronring nach Anspruch 1 und wobei:
i) die α-Phase eine Zusammensetzung hat aus Cu: 65 ∼ 74 Gew.-%, Al: 2,5 ∼ 4,5 Gew.-%, Ni: 0,5 ∼ 2,5 Gew.-%, Ti: 0,05 ∼ 0,6 Gew.-%, Mn: 0,03 ∼ 0,4 Gew.%, eine Gesamtheit von einem oder zwei aus Fe und Co: 0,05 ∼ 1,0 Gew.-%, eine Gesamtheit von einem oder zwei oder mehr aus Si, Mg, und P: 0,01 ∼ 0,35 Gew.-%, und Zn: 22 ∼ 28 Ges.-%, und
ii) die β'-Phase eine Zusammensetzung hat aus Cu: 62 ∼ 71 Gew.-%, Al: 3,5 ∼ 6,0 Gew.-%, Ni: 0,3 ∼ 2,3 Gew.-%, Ti: 0,05 ∼ 0,6 Gew.-%, Mn: 0,03 ∼ 0,4 Gew.-%, eine Gesamtheit von einem oder zwei aus Fe und Co: 0,05 ∼ 1,0 Gew.-%, eine Gesamtheit von einem oder zwei oder mehr aus Si, Mg, und P: 0,01 ∼ 0,35 Gew.-%, und Zn: 25 ∼ 31 Ges.-%.

## Revendications

1. Bague de synchronisation en alliage de cuivre ayant une excellente résistance de plasticité/fluidité dans un environnement de libération de chaleur hautement calorifique,
dans laquelle la bague de synchronisation en alliage de cuivre a une composition de Cu : 62,5 ∼ 67,5 % en poids, Al : 4,5 ∼ 5,5 % en poids, Ni : 2,7 ∼ 3,7 % en poids, Ti : 1,0 ∼ 2,0 % en poids et Mn : 0,05 ∼ 0,35 % en poids, éventuellement une composition supplémentaire d'un total d'un ou deux éléments parmi Fe et Co : 0,5 ∼ 1,5 % en poids, ou une composition supplémentaire d'un total d'un ou deux éléments ou plus parmi Si, Mg et P : 0,01 ∼ 0,3 % en poids, ou une composition supplémentaire d'un total d'un ou deux éléments parmi Fe et Co : 0,5 ∼ 1,5% en poids, une composition supplémentaire d'un total d'un ou deux éléments ou plus parmi Si, Mg et P : 0,01 ∼ 0,35 % en poids, et un complément de Zn et d'impuretés inévitables,
dans laquelle, lorsque Zn+ (impuretés inévitables) = ZN, une équivalence de Zn représentée par une équation {ZN+6x (Al-0,9)} / {Cu-1,3 + ZN+6x (Al-0,9)} se situe dans une plage de 0,4 ∼ 0,46, et
dans laquelle une structure basique d'un alliage de cuivre est une structure à deux phases de phase α et de phase ß'.

2. Bague de synchronisation en alliage de cuivre selon la revendication 1 et dans laquelle :
i) la phase α a une composition de Cu : 65 ∼ 74 % en poids, Al : 2,5 ∼ 4,5 % en poids, Ni : 0,5 ∼ 2,5 % en poids, Ti : 0,05 ∼ 0,6 % en poids, Mn : 0,03 ∼ 0,4 % en poids, et Zn : 22 ∼ 28 % en poids ; et
ii) la phase ß' a une composition de Cu : 62 ∼ 71 % en poids, Al : 3,5 ∼ 6,0 % en poids, Ni : 0,3 ∼ 2,3 % en poids, Ti : 0,05 ∼ 0,6 % en poids, Mn : 0,03 ∼ 0,4 % en poids, et Zn : 25 ∼ 31 % en poids.

3. Bague de synchronisation en alliage de cuivre selon la revendication 1 et dans laquelle :
i) la phase α a une composition de Cu : 65 ∼ 74% en poids, Al : 2,5 ∼ 4,5 % en poids, Ni : 0,5 ∼ 2,5 % en poids, Ti : 0,05 ∼ 0,6 % en poids, Mn : 0,03 ∼0,4 % en poids, un total d'un ou deux éléments parmi Fe et Co : 0,05 ∼ 1,0 % en poids, et Zn : 22 ∼ 28 % en poids, et
ii) la phase ß' a une composition de Cu : 62 ∼ 71 % en poids, Al : 3,5 ∼ 6,0 % en poids, Ni : 0,3 ∼ 2,3 % en poids, Ti : 0,05 ∼ 0,6 % en poids, Mn : 0,03 ∼ 0,4 % en poids, un total d'un ou deux éléments parmi Fe et Co : 0,05 à 1,0 % en poids, et Zn : 25 ∼ 31% en poids.

4. Bague de synchronisation en alliage de cuivre selon la revendication 1 et dans laquelle :
i) la phase α a une composition de Cu : 65 ∼ 74% en poids, Al : 2,5 ∼ 4,5 % en poids, Ni : 0,5 ∼ 2,5 % en poids, Ti : 0,05 ∼ 0,6 % en poids, Mn : 0,03 ∼ 0,4 % en poids, un total d'un ou deux éléments ou plus parmi Si, Mg et P : 0,01 ∼ 0,35 % en poids, et Zn : 22 ∼ 28 % en poids ; et
ii) la phase ß' a une composition de Cu : 62 ∼ 71 % en poids, Al : 3,5 ∼ 6,0 % en poids, Ni : 0,3 ∼ 2,3 % en poids, Ti : 0,05 ∼ 0,6 % en poids, Mn : 0,3 ∼ 0.4 % en poids, un total d'un ou deux éléments ou plus parmi Si, Mg et P : 0,01 ∼ 0,35 % en poids, et Zn : 25 ∼ 31 % en poids.

5. Bague de synchronisation en alliage de cuivre selon la revendication 1 et dans laquelle :
i) la phase α a une composition de Cu : 65 ∼ 74% en poids, Al : 2,5 ∼ 4,5 % en poids, Ni : 0,5 ∼ 2,5 % en poids, Ti : 0,05 ∼ 0,6 % en poids, Mn : 0,03 ∼ 0,4 % en poids, un total d'un ou deux éléments parmi Fe et Co : 0,05 ∼ 1,0 % en poids, un total d'un ou deux éléments ou plus parmi Si, Mg et P : 0,01 ∼ 0,35 % on poids, et Zn : 22 ∼ 28 % en poids ; et
ii) la phase ß' a une composition de Cu : 62 ∼ 71 % en poids, Al : 3,5 ∼ 6,0 % en poids, Ni : 0,3 ∼ 2,3 % en poids, Ti : 0,05 ∼ 0,6 % en poids, Mn : 0,03 ∼ 0,4 % en poids, un total d'un ou deux éléments parmi Fe et Co : 0,05 ∼ 1,0 % en poids, un total d'un ou deux éléments ou plus parmi Si, Mg et P : 0,01 ∼ 0,35 % en poids, et Zn : 25 ∼ 31% en poids.
